# EUROPEAN PATENT APPLICATION

(11) **EP 3 040 526 A1**
(43) Date of publication of application: **06.07.2016**
(21) Application number: 15200244.0
(22) Date of filing: 15.12.2015
(51) Int. Cl.: F01L 3/08

(54) **MULTI-MATERIAL VALVE GUIDE SYSTEM AND METHOD**

(30) Priority: 30.12.2014 US 201414585668
(71) Applicant: General Electric Company, Schenectady, NY 12345 (US)
(72) Inventor: KNUDSEN, Julian Richard, Waukesha, WI Wisconsin 53188 (US)
(74) Representative: Williams, Andrew Richard

(57) **Abstract**

A valve guide 48 for a reciprocating engine 10 including a passageway 102 that may receive a shaft of a poppet valve 100 and an inner wall 116 defining the passageway and having a first surface and a second surface, the first and second surfaces forming part of the passageway. The first surface includes a first material 136 and the second surface includes a second material. The first and second materials are different. The valve guide also includes at least one mechanical lock 138 between the first and second materials, wherein the at least one mechanical lock is disposed within the inner wall along the passageway.

## Description

### BACKGROUND

The subject matter disclosed herein relates to reciprocating engines and, more specifically, to a valve guide for a reciprocating engine.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

A reciprocating engine (e.g., an internal combustion engine such as a diesel engine) combusts fuel with an oxidant (e.g., air) in a combustion chamber to generate hot combustion gases, which in turn drive a piston (e.g., reciprocating piston) within a cylinder. In particular, the hot combustion gases expand and exert a pressure against the piston that linearly moves the position of the piston from a top portion to a bottom portion of the cylinder during an expansion stroke. The piston converts the pressure exerted by the hot combustion gases (and the piston's linear motion) into a rotating motion (e.g., via a connecting rod and a crankshaft coupled to the piston) that drives one or more loads, for example, an electrical generator. A cylinder head is generally at a top of the cylinder, above the piston and other components of the cylinder. The cylinder head may include a poppet valve (e.g., an intake and/or exhaust valve) within a valve guide. The poppet valve reciprocates within the valve guide to allow a flow of fluids (e.g., fuel, air, exhaust gases) in and out of the combustion chamber. For example, during engine operation, the poppet valve may open and close a fluid passage formed by the valve guide to control an influx of fuel (and air) into the combustion chamber, and an efflux of exhaust gases out of the combustion chamber.

The poppet valve and the valve guide are exposed to the operational conditions of the combustion chamber (e.g., elevated temperatures and combustion byproducts (e.g., exhaust gases, carbon particulates, etc.). The carbon particulates may deposit on surfaces of the poppet valve and the valve guide. Deposition of carbon particulates on the surfaces of the poppet valve and valve guide may result in sticking of the poppet valve. As such, the poppet valve may be unable to properly move (e.g., reciprocate) within the valve guide.

### BRIEF DESCRIPTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a valve guide for a reciprocating engine including a passageway that may receive a shaft of a poppet valve and an inner wall defining the passageway and having a first surface and a second surface, the first and second surfaces forming part of the passageway. The first surface includes a first material and the second surface includes a second material. The first and second materials are different. The valve guide also includes at least one mechanical lock between the first and second materials, wherein the at least one mechanical lock is disposed within the inner wall along the passageway.

In a second embodiment, a valve guide for a reciprocating engine including a passageway defined by an inner wall. The inner wall includes a first surface having a first material, a second surface having a second material different from the first material, and at least one mechanical lock. The at least one mechanical lock may retain the first material within the passageway.

In a third embodiment, a method of manufacturing a valve guide including a passageway having a thermally conductive portion and a wear-resistant portion includes depositing a first valve material onto a substrate to form a first consolidated structure and depositing a second valve material over a portion of a first surface of the first consolidated structure to form a second consolidated structure, the second consolidated structure comprises a second surface having the first valve material and the second valve material. The second surface forms a wall of the passageway.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a cross-sectional side view of an embodiment of a reciprocating or piston engine;
FIG. 2 is a cross-sectional view of an embodiment of a valve guide that may be used with the reciprocating engine of FIG. 1, the valve guide includes a thermally conductive material and a wear-resistant material within a central bore;
FIG. 3 is a cross-sectional view of an embodiment of the valve guide of FIG. 2, the valve guide having a plurality of grooves within the central bore of the valve guide;
FIG. 4 is a flow diagram of an embodiment of a method that may be used to manufacture the valve guide of FIG. 2;
FIG. 5 is a diagrammatical illustration of an embodiment of a portion of the valve guide of FIG. 2, resulting from various steps of the method of FIG. 4, wherein the portion of the valve guide includes the thermally conductive material;
FIG. 6 is a diagrammatical illustration of an embodiment of the portion of the valve guide of FIG. 5 resulting from various steps of the method of FIG. 4, wherein the portion of the valve guide includes a groove;
FIG. 7 is a diagrammatical illustration of the portion of the valve guide of FIG. 5 resulting from various steps of the method of FIG. 4, wherein the portion of the valve guide includes the wear-resistant material disposed within the groove;
FIG. 8 is a cross-sectional view of an embodiment of the valve guide of FIG. 2, wherein the valve guide has two inner diameters;
FIG. 9 is a diagrammatical illustration of an embodiment of the portion of the valve guide of FIG 5, wherein the portion of the valve guide has the wear-resistant material protruding out from a thermally conductive layer; and
FIG. 10 is a diagrammatical illustration of an embodiment of the portion of the valve guide of FIG. 5, wherein the portion of the valve guide has a top layer of the wear-resistant material flush with a top layer of the thermally conductive material.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The present disclosure provides embodiments for manufacturing multi-material valve guides having thermally conductive and wear-resistant properties using additive manufacturing techniques. Valve guides may be used to facilitate movement of poppet valves such as intake and exhaust valves of an engine. For example, the valve guides may keep a valve stem associated with the poppet valve straight, such that a valve head maintains proper contact with a valve seat on a cylinder head of the engine. The poppet valves lift out of the valve seat to open or close a passageway that enables a flow of fluids (e.g., fuel, air, exhaust gases, etc.) in and out of a combustion chamber of the engine. For example, during operation of the engine, the intake valve reciprocates within the valve guide to open the passageway and allow fuel and air to enter the combustion chamber, while the exhaust valve is nested within the corresponding valve seat to block the fuel and air from prematurely exiting the combustion chamber. Similarly, after combustion, the exhaust valve lifts from its corresponding valve seat to allow exhaust gases generated during combustion to be released, and the intake valve is nested within the corresponding valve seat. If the valve stem for the poppet valve (e.g., the intake and exhaust valves) is not straight, the poppet valve will not be in proper contact with the valve seat while in the closed position. As such, the passageway may not be properly sealed, and fluids may leak into and out of the combustion chamber. This may result in an increase in fuel consumption and decrease the efficacy and performance of the engine.

The valve guides, in particular the exhaust valve guide, may be exposed to high temperatures from the exhaust gas exiting through the exhaust passageway. For example, the exhaust gas generated from the combustion of the fuel and air may have a temperature between approximately 400 °C and approximately 900 °C. As the exhaust gas exits through the exhaust passageway, carbon deposits may form on valve and valve guide surfaces. The carbon deposits may cause the poppet valve (e.g., the exhaust valve) to stick. That is, the poppet valve may not properly reciprocate within the valve guide to open and close the passageway as needed. As such, the poppet valve may overheat. In addition, because of valve sticking, the passageway may not be sealed and fluid leakage may occur, as discussed above. Accordingly, engine efficacy and performance may be decreased. Various thermally conductive materials (e.g., copper-based) may be used to manufacture the valve guides. The thermally conductive materials may facilitate heat transfer from the valve stem to the cooling system. The heat transfer may maintain the poppet valve, and valve guide, at a desirable temperature, such that carbon may not deposit onto the valve and valve guide surfaces. However, while the thermally conductive materials mitigate carbon deposition, these materials are not wear resistant. Therefore, the valve guide may need to be repaired or replaced.

Wearing of the valve guide, in particular surfaces within the passageway, may increase an inner diameter of the valve guide. Accordingly, a clearance between the valve stem and the valve guide may also increase. The increased clearance may result in improper positioning of the poppet valve within the valve seat, and the passageway may not be sealed. As discussed above, improper sealing of the passageway may result in leakage of fluids, increased fuel consumption, and decreased engine performance. In addition the valve may burn due to leakage of combustion products. Once the valve does not seal well, undesirable torching or guttering of the valve may occur. Therefore, it may be advantageous to manufacture a multi-material valve guide having both thermally conductive and wear-resistant materials. Accordingly, the present disclosure includes embodiments directed toward manufacturing valve guides having both thermally conductive and wear-resistant materials using additive manufacturing techniques.

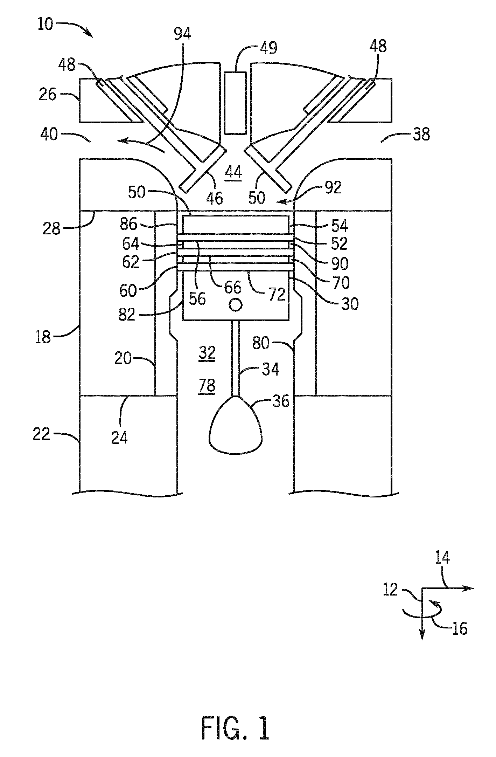

Turning now to the drawings, FIG. 1 is a cross-sectional side view of an embodiment of the reciprocating or piston engine 10 that may use the valve guide disclosed herein. In the following discussion, reference may be made to longitudinal axis or direction 12, a radial axis or direction 14, and/or a circumferential axis or direction 16 of the engine 12. As mentioned above, in certain embodiments, the engine 10 may include a valve guide to facilitate movement of poppet valves that enable a flow of fluids (e.g., fuel, air, exhaust gases, etc.) in and out of a combustion chamber of the engine (e.g., the engine 10). The engine 10 includes a cylinder 18 having a cylinder liner 20, a crankcase 22 coupled to a bottom end 24 of the liner 20 and the cylinder 18, a cylinder head 26 coupled to a top end 28 of the liner 20 and the cylinder 18, a piston 30 disposed in a cavity 32 within the liner 20, and a connecting rod 34 coupled to the piston 30 within the liner 20 and to a crankshaft 36 within the crankcase 22. The cylinder head 26 includes an intake port 38 for receiving air or a mixture of fuel and air and an exhaust port 40 for discharging exhaust from the engine 10. An intake valve 42 (e.g., a poppet valve), disposed within the cylinder head 26 and the intake port 38, opens and closes to regulate the intake of air or the mixture of fuel and air into the engine 10 into a portion 44 of the cavity 32 above the piston 30. An exhaust valve 46, disposed within the exhaust port 40, opens and closes to regulate discharge of the exhaust from the engine 10. Both the intake port 38 and the exhaust port 40 may include a valve guide 48 that facilitates movement of the intake and exhaust valves 42 and 46, respectively. The valve guide 48 may be press-fit into the respective port 38, 40. In certain embodiments (e.g., spark-ignition engine), a spark plug 49 extends through a portion of the cylinder head 26 and interfaces with the portion 44 of the cavity 32 where combustion occurs. In some embodiments (e.g., compression-ignition engine), the spark plug 49 is absent (or is replaced with a glow plug) and ignition occurs primarily due to compression of the mixture of air and fuel.

The piston 30 includes a crown 50, a first ring 52 (e.g., annular compression ring) disposed beneath a top land 54 and within a first ring (e.g., top ring) groove 56 of the piston 30, a second ring 62 (e.g., annular compression ring) disposed beneath a second land 64 and within a second ring groove 66 of the piston 30, and a third ring 68 (e.g., annular oil ring) disposed beneath a third land 70 and within a third ring groove 72 of the piston 30. In certain embodiments, the rings 52, 62, 68 may include a height less than a height of their respective grooves 56, 66, 72 creating a respective gap between the rings 52, 62, 68 and adjacent lands above each respective ring 52, 62, and 68. The first and second rings 52, 62 seal the portion 44 (e.g., combustion chamber) of the cavity 32, so that gases do not transfer into a portion 78 of the cavity 32 below the piston 30 into the crankcase 22. The third ring 68 regulates the consumption of engine oil. An inner surface 80 of the liner 20 and an outer side surface 82 of the piston 30 (e.g., the top land 54 and the first ring groove 56) at the top land 54 define a top land cavity or crevice 86. Pressure within the portion 44 of the cavity 32 above the piston 30 generally maintains a boundary (generally extending from an uppermost portion of the crown 50 radially 14 toward the inner surface 80 of the liner 20) between the portion 44 of the cavity 32 and the top land cavity 86 to trap any fluid (e.g., gases such as unburned hydrocarbons) within the top land cavity 86. The first and second rings 52, 62, the inner surface 80 of the liner 20, and the outer side surface 82 of the piston 30 (e.g., including the second land 64 and the second ring groove 66) define an interring cavity or crevice 90 (i.e., cavity between the first and second rings 52, 62).

Opening of the intake valve 42 enables a mixture of fuel and air to enter the portion 44 of the cavity 32 above the piston 30 as indicated by arrow 92. With both the intake valve 42 and the exhaust valve 46 closed and the piston 30 near top dead center (TDC) (i.e., position of piston 30 furthest away from the crankshaft 36, e.g., near the top end 28 of the liner 20 or the cylinder 18), combustion of the mixture of air and fuel occurs due to spark ignition (in other embodiments due to compression ignition). Hot combustion gases expand and exert a pressure against the piston 30 that linearly moves the position of the piston 30 from a top portion (e.g., at TDC) to a bottom portion of the cylinder liner 20 (e.g., at bottom dead center (BDC) in direction 12, which is the position of the piston 30 closest to the crankshaft 36, e.g., near the bottom end 24 of the liner 20 or the cylinder 18) during an expansion stroke. The piston 30 converts the pressure exerted by the combustion gases (and the piston's linear motion) into a rotating motion (e.g., via the connecting rod 34 and the crank shaft 36 coupled to the piston 30) that drives one or more loads (e.g., electrical generator). When combustion starts and pressure in the portion 44 of the cavity 32 builds up, fluid (e.g., unburned fuel or hydrocarbons) can partially leak past the first and second rings 52, 62 resulting in the blowby of the fluid (e.g., unburned hydrocarbons) into the crankcase 22 during the expansion stroke. During the exhaust stroke, the piston 30 returns from BDC to TDC, while the exhaust valve 46 is open to enable exhaust to exit the engine 10 via the exhaust port 40, as indicated by arrow 94.

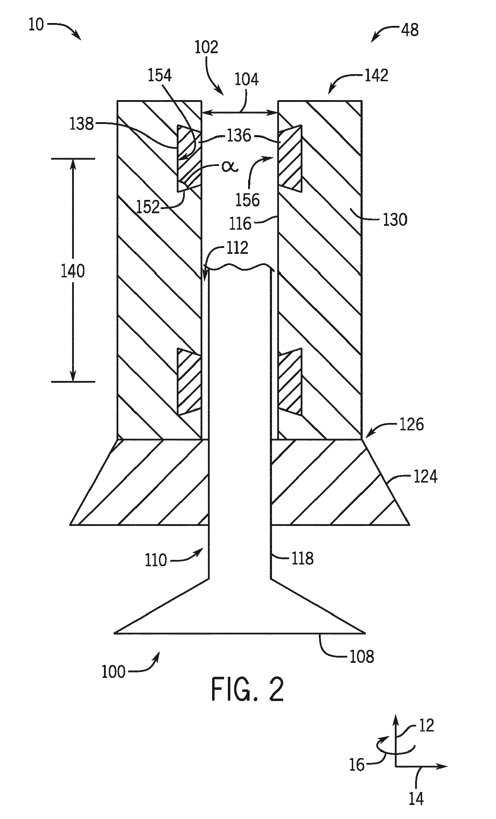

FIG. 2 is a cross-sectional view of an embodiment of the engine 10 that may utilize the valve guide 48 to facilitate movement of the intake valve 42 and the exhaust valve 46. To facilitate discussion of the disclosed embodiments, the intake valve 42 and the exhaust valve 46 will be collectively referred to as a poppet valve 100. The system 10 may include the valve guide 48 that may be fabricated using additive manufacturing. Notably, while the engine 10 is discussed in the context of an internal combustion engine, the engine 10 may also be any other reciprocating engine such as a steam engine. The valve guide 48 may also have the axial axis or direction 12, the radial axis or direction 14 away from axis 12, and the circumferential axis or direction 16 around axis 12. The valve guide 48 includes a central bore 102 having an inner diameter 104. During operation of the engine, the central bore 102 forms part of the fluid passageway (e.g., the ports 38, 40) that delivers and/or removes fluids (e.g., fuel, air, exhaust gas, etc.) from the combustion chamber of the engine.

The poppet valve 100 is inserted into the central bore 102 to control influx and efflux of the fluids from the combustion chamber, as discussed above. The poppet valve 100 includes a head 108 and a stem 110 (e.g., a shaft). The stem 110 is inserted into the central bore 102 and reciprocates within the central bore 102 to control a flow of fluids (e.g., fuel, air, exhaust gas, etc.) to and from the combustion chamber of the engine. The inner diameter 104 is sized such that a desirable clearance 112 between an inner wall 116 of the valve guide 48 and an outer wall 118 of the stem 110 enables movement of fluid through the central bore 102 and minimizes interference between the stem 110 and the central bore 102. As should be noted, a lubricant (e.g., oil) is generally provided to reduce friction between the central bore 102 and the stem 110 and aid in heat transfer between the stem 110 and the valve guide 48. In a closed position during operation, the head 108 may be nested within a valve seat 124 disposed on a first end 126 of the valve guide 48 to seal the fluid passageway (e.g., the central bore 102). Therefore, fluid flow to and from the combustion chamber (e.g., the portion 44), which is located adjacent to the first end 126, may be blocked in the closed position of the poppet valve 100. For example, once a desirable amount of the fuel and air are within the combustion chamber of the engine 10, the intake and exhaust valves 42 and 46, respectively (e.g., the poppet valve 100) may seal the central bore 102 to block release of the fuel and air from the combustion chamber.

As discussed above, the valve guide 48 may be exposed to the operational conditions of the combustion chamber (e.g., high temperatures, exhaust gases, carbon particulates, etc.). To mitigate undesirable effects associated with the high temperatures, the valve guide 48 is made of a thermally conductive material. Accordingly, the valve guide 48 includes a thermally conductive base 130 that dissipates the heat from the poppet valve 100 to a cooling system of the engine 10 or a parent material of the valve head 108, which is cooled by a water jacket. That is, the base 130 transfers heat away from the poppet valve 100. As such, a temperature of the valve guide 48 and the poppet valve 100 may be maintained at desirable levels, and thereby decrease valve overheating and carbon deposition on valve and valve guide surfaces. Example materials that may be used to fabricate the base 130 include, but are not limited to, copper, copper alloys (e.g. bronze, copper- beryllium, iodine, beryllium-free copper nickel alloys), or any other suitable thermally conductive material.

As discussed above, the thermally conductive base 130 is generally not wear resistant without the disclosed embodiments. Therefore, with time, reciprocating movement (e.g., along axis 12) of the poppet valve 100 within the valve guide 48 may cause the inner diameter 104 to increase. This may increase the clearance 112, and consequently, the valve guide 48 may be unable to maintain the valve stem 110 straight within the central bore 102. Because the valve stem 110 is not straight, undesirable leakage of fluids to and from the combustion chamber of the engine 10 may occur, as discussed above. To mitigate undesirable wear of the valve guide 48, the central bore 102 includes a wear-resistant material 136 (e.g., wear-resistant rings) in the disclosed embodiments. The wear-resistant material 136 (e.g., rings) may be disposed within one or more grooves 138 (e.g., annular grooves) on the inner wall 116. It may be advantages to fabricate valve guides, such as the valve guide 48, having the wear-resistant material 136 at certain locations along the inner wall 116 rather than fabricating the valve guide 48 entirely of the wear-resistant material 136. For example, fabricating the valve guide with only the wear-resistant material 136 may affect heat transfer away from the valve stem 110 to the cooling system of the engine 10. As such, the poppet valve 100 may overheat, which may affect the integrity of the poppet valve 100 due to thermal stress. Moreover, during use of the valve guide, the terminating ends of the valve guide may be more prone to wearing. Therefore, it may be desirable to place wear resistant materials at the terminating ends of the valve guide 48, as discussed in further detail below. Non-limiting examples of the wear-resistant material 136 include steel, alloy steel, cast iron, derivatives thereof, or any other suitable wear-resistant material. As should be noted, wear-resistant materials also include anti-corrosive and abrasion-resistant materials.

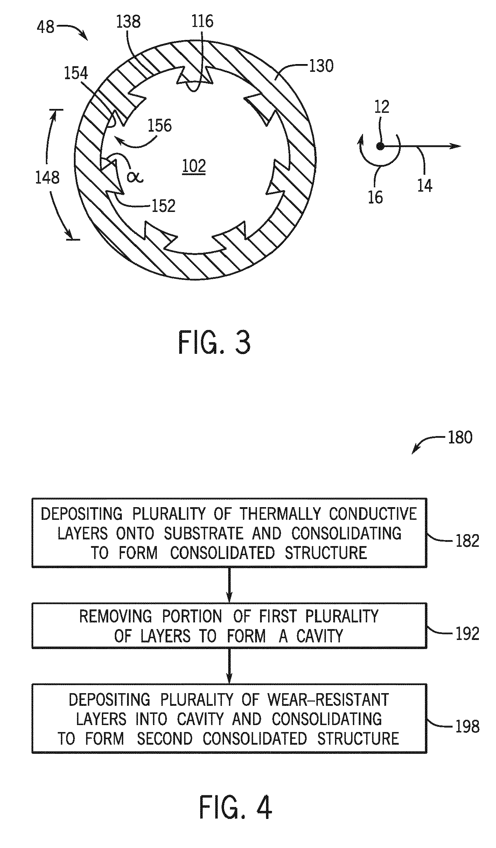

The grooves 138 may be evenly spaced axially apart by a distance 140, measured from center to center of each groove 138 along the longitudinal axis 12. Spacing of the grooves 138 may be determined based on areas of the central bore 102 that are more prone to wear, such as at or around the first end 126 and a second end 142 that is substantially opposite the first end 126. For example, because the first end 126 is adjacent to the combustion chamber (e.g., the portion 44), the first end 126 is exposed to the operational conditions of the combustion chamber. As should be noted, while in the illustrated embodiment the grooves 138 are only positioned at the ends 126, 142, the grooves 138 may be positioned at any other location along the central bore 102 (e.g., along the longitudinal axis 12). In certain embodiments, each groove 138 may continuously extend in a circumferential direction along an inner surface of the inner wall 116 (e.g., 360 degrees). That is, each groove 138 may extend around the inner surface (e.g., form an annular groove) of a portion of the inner wall 116, such as at or near the ends 126, 142. In other embodiments, the inner wall 116 may include multiple grooves 138 circumferentially spaced apart along the inner wall 116. For example, FIG. 3 is a cross-section view of the valve guide 48 having multiple grooves 138 spaced apart a circumferential distance 148 along the inner surface of the inner wall 116 about the axis 16 of the inner wall 116. The multiple grooves 138 are substantially opposite one another around the axis 16. As should be noted, any number of grooves 138 (e.g., 2 to 100) may be spaced apart about a circumference of the axis 16.

In certain embodiments, the grooves 138 may have a groove geometry (e.g., a cross-sectional geometry) that mechanically locks the wear-resistant material 136 within the groove 138. For example, in the illustrated embodiments, the grooves 138 have inclined edges 152 that form an acute angle α with the innermost wall 154 of the groove 138. The inclined edges 152 form a narrow groove opening 156 that retain/lock the wear-resistant material 136 within the grooves 138. Therefore, if the wear-resistant material 136 does not adhere well to the thermally conductive base 102 during manufacturing (or becomes loose during operation of the engine), the groove geometry may function as a mechanical lock (e.g., a dovetail joint) to retain the wear-resistant material 136 lodged within the groove 138. While in the illustrated embodiments, the grooves 138 have a trapezoidal cross-sectional shape, the grooves 138 may have any other suitable prismatic cross-sectional shape that may lock the wear-resistant material 136 within the grooves 138.

By incorporating the wear-resistant material 138 into certain portions of the thermally conductive base 102 (e.g., along the inner wall 116), valve guide wear may be decreased and heat transfer (e.g., through the thermally conductive base 102) away from the valve stem 110 be maintained. In addition, fluid leakage resulting from improper seating of the valve head 108 within the valve seat 124 (e.g., due to wear of the inner wall 116), and carbon deposition resulting from inefficient heat transfer (e.g., if the valve guide 48 does not include a thermally conductive material), may be mitigated.

As discussed above, one or more additive manufacturing techniques may be used to combine the wear-resistant material 136 with the thermally conductive base 102. Indeed, in certain embodiments, the valve guide 48 may be automatically built using an automated additive manufacturing system, which may result in reduced manufacturing time while enhancing manufacturing precision, process control, and reliability compared to more traditional manufacturing approaches, such as machining metal (e.g., rods, sheets, etc.) to form the valve guide. In certain embodiments, a powdered metal may be sued to manufacture the valve guide 48. The powdered metal may be disposed within a valve mold, pressed, and sintered in an oven. This may facilitate manufacturing a multi-material valve guide, in which powdered metal layers are built-up (e.g., with the wear resistant material interspersed throughout), than the powdered metal layers may be compressed and sintered.

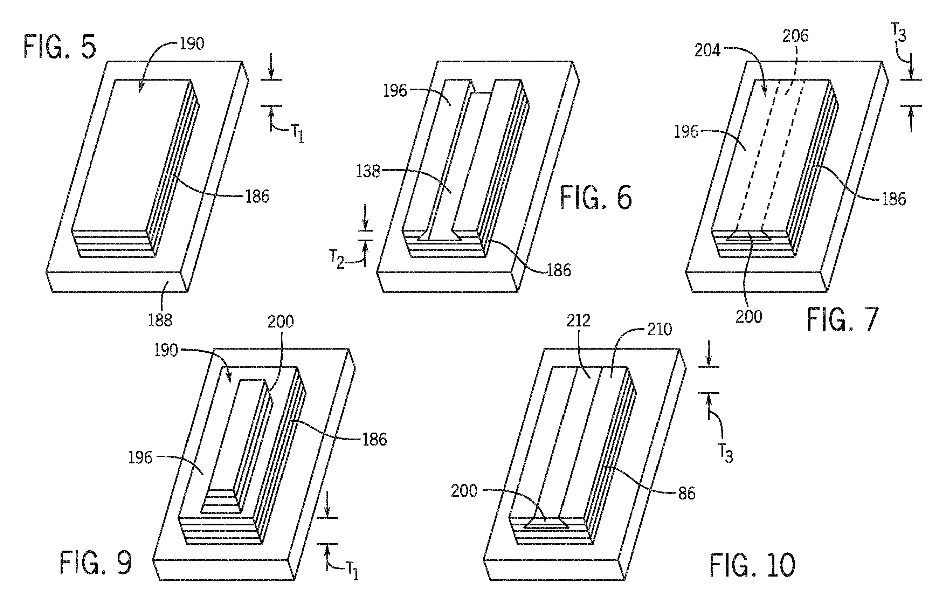

FIG. 4 illustrates an embodiment of a method 180 for constructing the valve guide 48 using additive manufacturing techniques (e.g., 3D printing). For example, 48 include, but are not limited to, selective laser melting, selective laser sintering, direct laser sintering, fused deposition modeling, electron beam melting, electron beam form fabrication, ultrasonic consolidation, or any other suitable additive manufacturing technique. To facilitate discussion of aspects of the method 180, reference is made to corresponding structures resulting from the acts of the method 180 in FIGS. 5-10. As should be noted, the structures illustrated in FIGS. 5-10 are simplified depictions of the poppet valve 100.

The method 180 includes depositing a first plurality of thermally conductive layers (e.g., the thermally conductive base material) onto a substrate and consolidating the first plurality of thermally conductive layers together to form a structure (block 182). For example, with reference to FIG. 5, the configuration resulting from the acts of block 182 are depicted. The diagram in FIG. 5 illustrates a first plurality of thermally conductive layers 186 deposited onto a substrate 188 (e.g., a working platform associated with the additive manufacturing apparatus), according to the acts of block 182. Consolidation of the first plurality of thermally conductive layers 186 form a first consolidated structure 190 having a thickness T₁. The first consolidated structure 190 forms part of the thermally conductive base 102 of the valve guide 48. As should be noted, any thermally conductive material suitable for use with the additive manufacturing techniques disclosed herein may be used to produce the valve guide 48. By way of non-limiting examples, such materials may include copper, aluminum, and their respective alloys, among others. The thermally conductive metals may be in the form of a sheet or a powder prior to consolidation.

Returning to the method 180 of FIG. 4, following deposition and consolidation of the first plurality of thermally conductive layers 186, in certain embodiments, a portion of the first plurality of thermally conductive layers 186 may be removed to form the groove 138 (block 192). For example, the groove 138 may be machined into the first consolidated structure 190. In accordance with block 192, as depicted in FIG. 6, the groove 138 is machined into a thermally conductive surface 196 that forms part of the inner wall 116 of the valve guide 48. As discussed above, the groove 138 has a prismatic cross-sectional shape that may facilitate retaining the wear-resistant material 136. While any relative size of the groove 138 is contemplated, by way of non-limiting example, a thickness T₂ of the cavity may be at least approximately 10% of the thickness of the first consolidated structure 190, such as between approximately 10% and 90% of the thickness, between approximately 20% and 80% of the thickness, or between approximately 30% and 60% of the thickness of the first consolidated structure 190.

Returning again to the method 180 of FIG. 4, upon removing a portion of the first plurality of thermally conductive layers 186 in accordance with block 192, the method 180 includes depositing a plurality of wear-resistant layers (e.g.,. the wear-resistant material 136) onto the plurality of thermally conductive layers 186 (block 198). As should be noted, non-corrosive and abrasion-resistant materials are considered to also be wear-resistant materials. Non-limiting examples of wear-resistant materials that may be used for the plurality of wear-resistant layers include steel, steel derivatives, cast iron, or any other suitable wear-resistant material, and combinations thereof. Referring to FIG. 7, a plurality of wear-resistant layers 200 are deposited within the groove 138, and consolidated to the plurality of thermally conductive layers 186 to form a second consolidated structure 204 having a thickness T₃. In certain embodiments, the thickness T₃ is substantially equal to the thickness T₁. In other embodiments, the thickness T₃ is larger than the thickness T₁. For examples, the thickness T₃ may be approximately 1%, 2%, 3%, 4%, 5%, 6%, 7%, 8%, 9%, 10% or more greater than the thickness T₁.

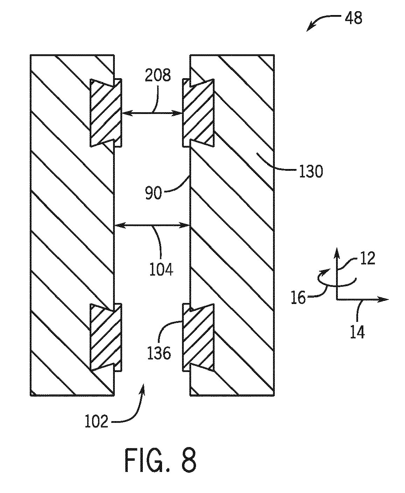

Due to the prismatic cross-sectional shape of the groove 138, the groove 138 mechanically locks the plurality of wear-resistant layers 200. Therefore, if the plurality of wear-resistant layers 200 do not adhere well to the plurality of thermally conductive layers 186 (e.g., due to different properties of the thermally conductive and wear-resistant materials) the configuration of the groove 138 may retain the wear-resistant material 136 within the groove 138. In certain embodiments, a top wear-resistant layer 206 may be flush with the thermally conductive surface 196. In other embodiments, the top wear-resistant layer 206 may protrude out from the thermally conductive surface 196. As such, the valve guide 48 may have two inner diameters (e.g., the inner diameter 104). For example, as illustrated in FIG. 8, the central bore 102 includes the inner diameter 104, corresponding to a radial distance (e.g., along radial axis 14) between the thermally conductive material on the inner wall 116, and a smaller second inner diameter 208, corresponding to the radial distance between the wear-resistant material 136 on the inner wall 116. By having the wear-resistant material 136 protrude out from the thermally conductive surface 196, wear of the thermally conductive surface 196 (e.g., that forms part of the central bore 102) may be decreased during operation of the engine 10. This is due, in part, to the poppet valve 100 not being in direct contact with the thermally conductive surface 190.

As should be noted, in certain embodiments, the groove 138 may not be machined into the first consolidated structure 190. Rather, in one embodiment, illustrated in FIG. 9, the plurality of wear-resistant layers 200 may be deposited onto the thermally conductive surface 196 and machined (e.g., cut) to form a desired shape (e.g., the prismatic cross-sectional geometry). Additional thermally conductive layers 186 may be deposited on the thermally conductive surface 196 adjacent to the plurality of wear-resistant layers 200 to partially surround the plurality of wear-resistant layers 200 and form the groove 138, in FIG. 10. The additional thermally conductive layers 186 may be printed onto the thermally conductive surface 196 until a top thermally conductive layer 210 is flush with, or a desired distance below, a top wear-resistant layer 212. That is, the plurality of wear-resistant layers 200 may serve as a mold for the groove 138. In other embodiments, the plurality of wear-resistant layers 200 is not machined to form the desired shape. Instead, the plurality of wear-resistant layers 200 is deposited (e.g., printed) into the desired shape. As should be noted, the wear-resistant layers 200 may be deposited into the desired shape before the thermally conductive layers 186, such that the thermally conductive layers 186 build out from the wear-resistant layers 200. That is, the inner wall 116 of the valve guide 48 is formed first.

As discussed above, certain embodiments of the valve guide 48 include incorporating the wear-resistant material 136 into portions of a thermally conductive inner wall 116 of the central bore 102 (e.g., annular shape). The valve guide 48 also includes a mechanical lock (e.g., the groove 138) to retain the wear-resistant material 136 lodged within the inner wall 116 of the central bore 102. Accordingly, the valve guide 48 disclosed herein may be both thermally conductive and wear-resistant. For example, the thermally conductive base 130 (e.g., annular base) may facilitate heat transfer away from the valve stem 110 of the poppet valve 100 and toward the cooling system of the engine 10. As such, overheating of the poppet valve 100 and carbon deposition on valve and valve guide surfaces may be mitigated. Additionally, by positioning the wear-resistant material 136 along portions of the inner wall 116, the wear-resistant material 136 may reduce wear of the valve guide 48 within the central bore 102. This may facilitate maintaining the poppet valve 100 straight within the central bore 102, and thereby mitigate leakage of fluids to and from the combustion chamber of the engine. Therefore, engines that utilize the valve guide 48 may have an increase in cylinder head reliability and may perform at a higher power compared to engines that include valve guides fabricated from only thermally conductive or wear-resistant materials. Additionally, additive manufacturing techniques may facilitate multi-material manufacturing of the valve guide 48.

This written description uses examples to disclose the invention, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A valve guide for a reciprocating engine, comprising:
   a passageway configured to receive a shaft of a poppet valve,
   an inner wall defining the passageway and having a first surface and a second surface, the first and second surfaces forming part of the passageway, wherein the first surface comprises a first material and the second surface comprises a second material, and wherein the first and second materials are different; and
   at least one mechanical lock between the first and second materials, wherein the at least one mechanical lock is disposed within the inner wall along the passageway.
2. The valve guide of clause 1, wherein the at least one mechanical lock comprises a groove, wherein the groove comprises a prismatic cross-sectional geometry.
3. The valve guide of any preceding clause, wherein the first material is disposed within the at least one mechanical lock.
4. The valve guide of any preceding clause, wherein the at least one mechanical lock comprises a first mechanical lock positioned adjacent to a first end of the valve guide and a second mechanical lock positioned adjacent to a second end of the valve guide.
5. The valve guide of any preceding clause, wherein the first surface forms part of a first inner diameter of the passageway and the second surface forms part of a second inner diameter of the passageway, wherein the first inner diameter is smaller than the second inner diameter.
6. The valve guide of any preceding clause, wherein the first material radially protrudes out from the inner wall.
7. The valve guide of any preceding clause, wherein the first material is a wear-resistant material.
8. The valve guide of any preceding clause, wherein the wear-resistant material comprises steel, cast iron, or a combination thereof.
9. The valve guide of any preceding clause, wherein the second material comprises a thermally conductive material, and the thermally conductive material comprises copper, aluminum, or a combination thereof.
10. A valve guide for a reciprocating engine; comprising:
   a passageway defined by an inner wall, wherein the inner wall comprises:
      a first surface having a first material;
      a second surface having a second material different from the first material; and
      at least one mechanical lock, wherein the at least one mechanical lock is configured to retain the first material within the passageway.
11. The valve guide of any preceding clause, wherein the at least one mechanical lock comprises a groove, and the groove has a prismatic cross-sectional shape.
12. The valve guide of any preceding clause, wherein the first material is disposed within the groove.
13. The valve guide of any preceding clause, wherein the first material comprises a wear-resistant material, and the wear-resistant material comprises steel, cast iron, and derivatives thereof.
14. The valve guide of any preceding clause, wherein the second material comprises a thermally conductive material comprising copper, copper alloys, aluminum alloys, or combinations thereof.
15. The valve guide of any preceding clause, wherein the first surface forms part of a first inner diameter of the passageway and the second surface forms part of a second inner diameter of the passageway, wherein the first inner diameter is smaller than the second inner diameter.
16. A method of manufacturing a valve guide comprising a passageway having a thermally conductive portion and a wear-resistant portion comprising:
   depositing a first valve material to form a first consolidated structure; and
   depositing a second valve material over a portion of a first surface of the first consolidated structure to form a second consolidated structure, the second consolidated structure comprises a second surface having the first valve material and the second valve material, wherein the second surface forms a wall of the passageway.
17. The method of any preceding clause, comprising removing a portion of the first valve material from the first consolidated structure to form a groove on the first surface.
18. The method of any preceding clause, wherein depositing the second valve material comprises depositing the second valve material within the groove.
19. The method of any preceding clause, wherein the groove comprises a prismatic cross-sectional shape configured to retain the second valve material lodged within the groove.
20. The method of any preceding clause, wherein the first valve material is a thermally conductive material and the second valve material is a wear-resistant material.

## Claims

1. A valve guide for a reciprocating engine, comprising:
a passageway configured to receive a shaft of a poppet valve,
an inner wall defining the passageway and having a first surface and a second surface, the first and second surfaces forming part of the passageway, wherein the first surface comprises a first material and the second surface comprises a second material, and wherein the first and second materials are different; and
at least one mechanical lock between the first and second materials, wherein the at least one mechanical lock is disposed within the inner wall along the passageway.

2. The valve guide of claim 1, wherein the at least one mechanical lock comprises a groove, wherein the groove comprises a prismatic cross-sectional geometry.

3. The valve guide of claim 1 or 2, wherein the first material is disposed within the at least one mechanical lock.

4. The valve guide of claim 1, 2 or 3, wherein the at least one mechanical lock comprises a first mechanical lock positioned adjacent to a first end of the valve guide and a second mechanical lock positioned adjacent to a second end of the valve guide.

5. The valve guide of any of claims 1 to 4, wherein the first surface forms part of a first inner diameter of the passageway and the second surface forms part of a second inner diameter of the passageway, wherein the first inner diameter is smaller than the second inner diameter.

6. The valve guide of any preceding claim, wherein the first material radially protrudes out from the inner wall.

7. The valve guide of any preceding claim, wherein the first material is a wear-resistant material.

8. The valve guide of any preceding claim, wherein the second material comprises a thermally conductive material, and the thermally conductive material comprises copper, aluminum, or a combination thereof.

9. A valve guide for a reciprocating engine; comprising:
a passageway defined by an inner wall, wherein the inner wall comprises:
a first surface having a first material;
a second surface having a second material different from the first material; and
at least one mechanical lock, wherein the at least one mechanical lock is configured to retain the first material within the passageway.

10. The valve guide of claim 9, wherein the at least one mechanical lock comprises a groove, and the groove has a prismatic cross-sectional shape.

11. The valve guide of claim 10, wherein the first material is disposed within the groove.

12. The valve guide of claim 9, 10 or 11, wherein the first surface forms part of a first inner diameter of the passageway and the second surface forms part of a second inner diameter of the passageway, wherein the first inner diameter is smaller than the second inner diameter.

13. A method of manufacturing a valve guide comprising a passageway having a thermally conductive portion and a wear-resistant portion comprising:
depositing a first valve material to form a first consolidated structure; and
depositing a second valve material over a portion of a first surface of the first consolidated structure to form a second consolidated structure, the second consolidated structure comprises a second surface having the first valve material and the second valve material, wherein the second surface forms a wall of the passageway.

14. The method of claim 13, comprising removing a portion of the first valve material from the first consolidated structure to form a groove on the first surface.

15. The method of claim 13 or 14, wherein the first valve material is a thermally conductive material and the second valve material is a wear-resistant material.
